Europäisches Patentamt

(19) European Patent Office

Office européen des brevets

(11) Publication number : **0 489 536 A2**

# EUROPEAN PATENT APPLICATION

(21) Application number : 91310949.2

(22) Date of filing : 27.11.91

(51) Int. Cl.$^5$ : **C08F 4/654**, C08F 10/00, C08F 10/06

(30) Priority : **29.11.90 GB 9025938**

(43) Date of publication of application :
**10.06.92 Bulletin 92/24**

(84) Designated Contracting States :
**AT BE DE ES FR GB IT NL SE**

(71) Applicant : **IMPERIAL CHEMICAL INDUSTRIES PLC**
**Imperial Chemical House, Millbank**
**London SW1P 3JF (GB)**

(72) Inventor : **Kiff, Frank Thomas**
**113 Guisborough Road, Nunthorpe**
**Middlesbrough, Cleveland TS7 0JD (GB)**

(74) Representative : **Roberts, Jonathan**
**Winstanley et al**
**Imperial Chemical Industries PLC Legal**
**Department;Patents Bessemer Road PO Box 6**
**Welwyn Garden City Hertfordshire AL7 1HD**
**(GB)**

(54) **Olefin polymerisation catalysts.**

(57)   Highly stereospecific olefin polymerisation catalysts, particularly for making polypropylene, are based on supported complexes of Ti(IV), particularly on magnesium chloride, itself supported on silica, include methylene dibenzoate esters of the formula (I) :

$$R_1.CO_2.C(R_3R_4).O_2C.R_2 \quad (I)$$

($R_1$ and $R_2$ are aryl and $R_3$ and $R_4$ are either hydrogen atoms or alkyl groups or together with the carbon atom carrying them form a cycloalkyl group or together form a group of the formula $=CR_5R_6$ where $R_5$ and $R_5$ are as defined for $R_3$ and $R_4$) as internal electron donors. Catalyst systems include a co-catalyst, particularly an aluminium tri-alkyl, and an external electron donor, particularly a dialkoxydialkylsilane.

This invention relates to olefin polymerisation catalysts and catalytic systems and in particular to catalysts and catalytic systems for the polymerisation of $C_3$ to $C_6$ alpha-olefins, especially propylene.

It is known to carry out stereospecific polymerisation of olefinically unsaturated monomers, in particular, propylene, using transition metal compounds, particularly Ti(IV) halides supported on magnesium halides, particularly magnesium chloride as catalysts. Normally, an organic compound of aluminium and/or of a metal of group IIA of the (Mendeleev) Periodic Table, most commonly an aluminium trialkyl, is used as a co-catalyst and is typically introduced at the time of polymerisation e.g. with the olefin monomer. The stereospecificity of such catalysts is enhanced to commercially useful levels by including one or more electron donors (Lewis bases) in the catalytic system. Typically, two electron donors are used, a first, usually referred to as the internal electron donor, which is present in the catalyst with the Ti(IV) halide on magnesium halide support, and the second, usually referred to as the external electron donor, which is added to the system at the time of polymerisation e.g. by introduction with the olefin monomer. The precise mechanism of operation of the internal and external electron donors is not known, but the overall effect is to markedly enhance the stereospecificity of the catalyst and therefore, the stereoregularity of the polymer. In modern practice the internal electron donor is an alkyl ester of an aromatic carboxylic acid and the external donor is a hydrocarbyloxyhydrocarbylsilane, most usually a dialkoxpdialkylsilane, in which the hydrocarbyloxy (and alkoxy) and hydrocarbyl (alkyl) groups may be substituted by alkyl (including cycloalkyl) and/or aryl groups.

Esters of benzoic acid, and its ring substituted derivatives, such as toluic and anisic acids, particularly the ethyl esters such as ethyl benzoate, have been widely proposed as internal electron donors for stereospecific olefin polymerisation catalysts. The present invention is based on the discovery that certain (nominal) methylene diol diesters of benzoic acid, and its substitution derivatives are good internal electron donors and are, in particular more effective than their simple benzoate ester counterparts.

The present invention accordingly provides a stereospecific alpha-olefin polymerisation catalyst comprising a Ti(IV) halide supported on magnesium halide as a catalyst support and including as an internal electron donor an ester of the formula (I):

$$R_1.CO_2.C(R_3R_4).O_2C.R_2 \quad (I)$$

where

R$_1$ and R$_2$ are each independently an aryl group; and

R$_3$ and R$_4$ are each independently hydrogen atoms or alkyl groups; or

R$_3$ and R$_4$ together with the carbon atom carrying them form a cycloalkyl group; or

R$_3$ and R$_4$ together form a group of the formula $=CR_5R_6$

where R$_5$ and R$_6$ are each as defined above for R$_3$ and R$_4$.

The catalyst of the invention will usually be used in a stereospecific alpha-olefin polymerisation catalyst system comprising

i a Ti(IV) halide supported on magnesium halide as a catalyst support;

ii an ester of the formula (I) as defined above as an internal electron donor;

iii a co-catalyst, particularly an aluminium alkyl or haloalkyl ; and

iv an external electron donor, particularly a dialkoxydialkylsilane, and this catalyst system accordingly forms a particular feature of the invention. The invention further includes a method of making a polyolefin polymer comprising polymerising at least one $C_3$ to $C_6$ alpha-olefin, particularly propylene, optionally with ethylene, in the presence of the stereospecific alpha-olefin polymerisation catalyst system of the invention.

The aryl groups R$_1$ and R$_2$ are particularly phenyl or naphthyl groups which are unsubstituted or can be halogen, especially chlorine, or alkyl or alkoxy substituted. When the aryl groups are substituted they will not usually carry more than one substituent each and, when the aryl groups are phenyl groups, usually this single substituent will be in the 4-position. Alkyl moieties (including in alkoxy groups and in substituents on other groups) in the groups R$_1$ to R$_4$ are typically $C_1$ to $C_4$ alkyl, especially methyl or ethyl, moieties. Cycloalkyl groups are particularly cyclopentyl or cyclohexyl groups. Most commonly, R$_3$ and R$_4$ are both hydrogen atoms and R$_1$ and R$_2$ are unsubstituted or 4-chloro-, 4-methyl- or 4-methoxy-substituted phenyl groups. Methylene dibenzoate is a particularly suitable material.

The co-catalyst, sometimes called an activator used in conjunction with the catalyst of the invention in the catalyst system, may be an organic magnesium compound or a mixture or complex thereof with an organic aluminium compound. Alternatively, a complex of a metal of Group IA with an organic aluminium compound map be used, for example, a lithium aluminium tetra-alkyl. However, it is preferred to use an organic aluminium compound and in particular it is preferred to use a tri-hydrocarbyl aluminium compound such as an aluminium trialkyl compound, particularly one in which each alkyl group independently contains 1 to 10 carbon atoms, for example, aluminium triethyl, aluminium triisobutyl or aluminium trioctyl.

The catalyst system includes a further Lewis base, conveniently referred to as an external electron donor. This external electron donor will usually be an organic silicon compound, in particular a hydrocarbyl alkoxy silane. Suitable organic silicon compounds include dialkyl dialkoxy silanes, preferably di-(C1 to 10)alkyl dimethoxy silanes, for example di-iso-propyldimethoxy-silane. Other organic silicon compounds which may be used include phenyltriethoxysilane, diphenyldi-iso-butoxysilane, diphenyldimethoxysilane and iso-butyl-triethoxysilane.

The effective catalyst is formed on the surface of a support of a magnesium halide, particularly magnesium chloride. Thus, solid magnesium halide, especially magnesium chloride can be used as the support. If necessary, the magnesium halide can be formed into particles by methods known in the art. In this invention, it is particularly convenient for the magnesium halide itself to be supported on a carrier, particularly a substantially inert solid carrier. The solid carrier is, in particular a silica carrier especially as described in our European Patent Specification No. 0371664 A.

The support may be contacted with the methylene ester Lewis base of formula (I) before or after reacting the magnesium compound with the transition metal compound. The molar ratio of methylene ester added to the support, particularly a silica support, may be up to 5:1, but is preferably from 0.1:1 to 1:1, and is especially not more than 0.5:1, for example about 0.33:1. The amount of the methylene ester in the final catalyst will typically be rather less than these figures as some and usually most of the methylene ester will be removed by washing the catalyst (done to remove excess material and to remove catalyst fines if any). Where the support is a silica support, particularly as described in EP 0371664 A, we believe that the molar ratio of the methylene ester to the silica in the catalyst is in the approximate range 0.005 to 0.02 moles per mole of silica i.e. only about from 2 to 5% of the methylene ester is retained.

The temperature at which the support is contacted with the methylene ester Lewis base and transition metal compound will typically be in the range 60 to 100°C. At temperatures below about 60°C, the reaction forming the catalytic sites is slow and likely to yield catalysts of relatively low activity and at temperatures above about 100°C the esters may be decomposed. Within this range temperatures of from 65 to 85°C are particularly used. The particular optimum temperature will vary with the ester. Esters having longer chain substituents tend to give complexes with the transition metal compounds, particularly $TiCl_4$, that are more soluble in the hydrocarbon solvents typically used in the catalyst preparation procedure. This map enable somewhat lower temperatures to be used.

When the reaction has been completed, the excess transition metal compound is preferably removed from the reaction mixture whilst still at an elevated temperature, particularly at a temperature of at least 70°C. The excess liquid can be removed using any suitable technique, for example filtration, decanting, siphoning or centrifuging and the product can usefully be washed at or near the reaction temperature.

In the polymerisation catalyst system, the molar ratio of co-catalyst to transition metal in the catalyst will generally be at least 1:1 and desirably at least 10:1, but not more than 500:1 and usually not more than 250:1. The optimal ratio is usually in the range 10:1 to 60:1. The total amount of the external electron donor (Lewis base) used in the catalyst system will not generally exceed 5 times the amount of co-catalyst and the molar ratio of external electron donor to co-catalyst is typically from 0.01:1 to 0.5:1, and desirably from 0.05:1 to 0.4:1.

The catalyst system of the present invention may be obtained by pre-mixing the catalyst, co-catalyst and external electron donor before introducing the catalyst system into a polymerisation process. Alternatively, all the catalyst components may be introduced separately into a polymerisation process.

The invention further includes a process for the production of a polymer or copolymer of an unsaturated monomer, in particular an olefin, wherein at least one unsaturated hydrocarbon monomer is contacted under polymerisation conditions with a polymerisation catalyst as hereinbefore described.

The monomer to be polymerised will typically be an olefin, particularly an aliphatic mono-olefin monomer which contains 2 to 10 carbon atoms. Most usually the monomer will be of the formula $CH_2=CHR^5$ where $R^5$ is a hydrogen atom or a hydrocarbon radical especially an alkyl, particularly a C1 to C8 and especially a methyl, group or an aryl, especially a phenyl, group. Particular monomers which may be polymerised or copolymerised by the process of the present invention include ethylene, butene-1, pentene-1, hexene-1, 4-methylpentene-1, styrene, 1,3-butadiene and especially propylene.

The monomers may be homopolymerised or may be copolymerised together. Copolymerisation can be performed using a mixture of monomers which has substantially the same composition throughout the polymerisation process. Alternatively, a sequential polymerisation process, such as described in British patents 970478 and 970479 may be used, for example by polymerising propylene alone and thereafter polymerising a mixture of propylene and ethylene to give a polymer product which contains from 2 up to 30% by weight of ethylene residues.

The present invention is particularly suitable for the polymerisation of propylene, and especially for the polymerisation or copolymerisation of propylene in the gas phase. Gas phase polymerisation will commonly be carried out including a preliminary pre-polymerisation step.

The following Examples illustrate the invention. All parts and percentages are by weight unless otherwise stated.

In the examples, all operations are effected under an atmosphere of essentially oxygen and water free nitrogen unless otherwise stated. All the glass apparatus was dried in an air oven at 120°C for at least one hour and purged with nitrogen before use.

## Materials

microspheroidal silica type 32-17-50 ex W R Grace dried before use at 120°C for 48 hours in an air oven.

EC 180 is an aliphatic hydrocarbon diluent consisting essentially of dodecane isomers and having a boiling point in the range 170°C to 180°C.

The propylene used for polymerisation was propylene of commercial purity purified further by passing the gas through a column containing granules of Alcoa F1 alumina at ambient temperature.

## Test and analytical Methods

Melt Flow Index (MFI) - This was measured by ASTM Test Method D1238/70, using a temperature of 190°C and a weight of 10 kg (to give a force of ca.98 N). Results are quoted in g.(10min)$^{-1}$.

Atomic Analysis - Residual titanium (Ti), aluminium (Al) and chlorine (Cl) (from the catalyst) in the polymer were measured using neutron activation analysis on polymer powders and the results are given in parts per million (ppm) by weight on the total polymer product (polymer + catalyst residues).

Xylene Solubles (Xys) - This is the percentage (by weight) of the polymer which is soluble in xylene. The method used FDA (US Food and Drug Administration) method 177.1520. It involves dissolving a sample of polymer (2 g for polypropylene homopolymer) in 100 ml of hot (boiling) xylene, cooling the solution to 25°C, separating the precipitated material from the remaining solution and measuring the material in solution by evaporating the solvent from a measured sample of the solution and weighing the residue. The mixture is usually held at 25°C for at least 12 hours to ensure equilibration of solution and precipitate. The amount dissolved is calculated and expressed as a percentage of the starting quantity of polymer.

## Synthesis Example 1

### Methylene dibenzoate

The title compound was prepared by the general method of Holmberg and Hansen (Tetrahedron Letters No 27 pp 2303-2306, 1975) by reacting the tetrabutylammonium salt of the benzoic acid with methylene dichloride or methylene dibromide and recrystallising the ester product from ethanol. The structure of the product was confirmed by NMR analysis.

## Synthesis Examples 2 to 5

Methylene di-p-toluate, methylene di-p-chlorobenzoate, methylene di-o-toluate, and methylene di-p-anisate were made by the general method of SE 1 but substituting p-toluic, p-chlorobenzoic, o-toluic and p-anisic acids respectively for the benzoic acid used in SE 1. The structures of the products were confirmed by NMR analysis.

## Synthesis Example 6

### Vinylidene dibenzoate

The title compound was made by the general method of SE 1 but using 2,2-dibromopropane instead of the methylene dichloride or dibromide used in SE 1. NMR analysis of the product indicated that the product obtained was the title compound rather than the propane 2,2-dibenzoate which might have been expected.

## Synthesis Example 7

### Benzylidene dibenzoate

The title compound was made by the general method described in Monatsh, 1909, Vol 30 pp 861 and 862, using a 1:2 molar ratio of benzaldehyde and benzoic anhydride. The crude product was recrystallised from ethanol and its structure product was confirmed by NMR analysis.

## Catalyst Preparation Example 1

Dibutyl magnesium (58.7 ml of 0.75 molar solution of in heptane, 44 mmol) was added with stirring to a mixture of dried microspheroidal silica (20g) in EC 180 (200 ml). After 1 hour, the stirrer was stopped, the mixture allowed to settle and the supernatant liquid decanted off. Hydrocarbon solvent [toluene or EC 180] (to a total volume of 500 ml) was added to the solid residue, the mixture stirred for 15 minutes, allowed to settle and the supernatant liquid decanted off. Fresh hydrocarbon solvent (to a total volume of 200 ml) was then added followed by cyclohexane carboxylic acid (11.3 g, 88 mmol), the mixture stirred and heated to 67°C and maintained at that temperature for 1 hour. Further hydrocarbon solvent (to a total volume of 500 ml) was added, the stirrer stopped, the mixture allowed to settle and the supernatant liquid decanted off. The residue was cooled to below 30°C and titanium tetrachloride (200 ml) added. The stirrer was re-started, the mixture re-heated to 67°C and methylene dibenzoate (12 ml of a 0.5 molar solution in hydrocarbon solvent, 6 mmol) added. After 30 minutes, the stirrer was stopped, the mixture allowed to settle and the supernatant liquid decanted off. Toluene (to a total volume of 500 ml) was added to the stirred residue so as to maintain a temperature above 60°C and the mixture heated to 67°C. After 20 minutes, the stirrer was stopped, the mixture allowed to settle and the supernatant liquid decanted off. This washing procedure was repeated twice further using hydrocarbon solvent and then twice using EC 180 as wash liquors. Finally the mixture was cooled to below 30°C and re-slurried in EC 180 to a total volume of 400 ml.

## Catalyst Preparation Examples 2 to 7, 1C and 2C

Further catalysts, CPE 2 to 7, were made by the method described in CPE 1 but using instead the esters of SE 2 to 7 respectively. Comparative catalysts, CPE 1C and 2C, were also made using ethyl benzoate and 1,2-ethane dibenzoate respectively as the esters. (The ethyl benzoate and 1,2-ethane dibenzoate were made by standard esterification methods from the respective alcohols and the acid or anhydride.)

## Application Examples 1 to 7, 1C and 2C

The catalysts of CPE 1 to 7, 1C and 2C were used to make polypropylene by the following method:

An 8 litre sealed autoclave containing an atmosphere of propylene (at ambient pressure and 20°C) was charged with aluminium trialkyl (10 ml of 1 molar solution in EC 180, 10 mmol), di-iso-propyl dimethoxy silane (2 ml of 0.5 molar solution in EC 180) and 3 ml of catalyst slurry prepared as described in the Catalyst Preparation Examples. 5 litres of liquid propylene were introduced into the autoclave and stirred at 20°C for 15 minutes after which it was heated to 70°C over a period of 15 minutes and hydrogen was added as a chain transfer agent to control the molecular weight of the polymer produced. (The target molecular weight corresponded to a melt flow index of about 30 g.(10min)$^{-1}$, but such small scale polymerisations are difficult to control in this respect so quite a wide range of MFI values was obtained.) After 1 hour at 70°C the remaining propylene monomer was vented from the autoclave and the polymer collected as a free flowing powder which was dried in a stream of air for 1 hour at 95°C. The polymer products were tested for catalyst residues, stereo-regularity (using the Xylene solubles test) and MFI. The results of these tests are set out in Table 1 below

Table 1

| Ex No | MFI | Xys (%) | Catalyst residues (ppm) | | |
|-------|-----|---------|------|------|------|
|       |     |         | Cl   | Mg   | Ti   |
| 1     | 14  | 3.5     | 64   | 12   | 18   |
| 2     | 29  | 4.3     | 51   | 11   | 20   |
| 3     | 3   | 4.5     | 97   | 20   | 31   |
| 4     | 19  | 8.9     | 59   | 13   | 17   |
| 5     | 31  | 6.0     | 122  | 25   | 39   |
| 6     | 35  | 3.1     | 44   | 10   | 13   |
| 7     | 43  | 7.8     | 40   | 9    | 12   |
| 1C    | 41  | 7.6     | 53   | 12   | 19   |
| 2C    | 77  | 4.9     | 138  | 23   | 58   |

**Claims**

1 A stereospecific alpha-olefin polymerisation catalyst comprising a Ti(IV) halide supported on magnesium halide as a catalyst support and including as an internal electron donor an ester of the formula (I):

$$R_1.CO_2.C(R_3R_4).O_2C.R_2 \quad (I)$$

where

$R_1$ and $R_2$ are each independently an aryl group; and

$R_3$ and $R_4$ are each independently hydrogen atome or alkyl groups; or

$R_3$ and $R_4$ together with the carbon atom carrying them form a cycloalkyl group; or

$R_3$ and $R_4$ together form a group of the formula $=CR_5R_6$

where $R_5$ and $R_6$ are each as defined above for $R_3$ and $R_4$.

2 A catalyst as claimed in claim 1 wherein, in the formula (I) $R_1$ and $R_2$ are each independently phenyl.

3 A catalyst as claimed in either claim 1 or claim 2 wherein, in the formula (I) $R_3$ and $R_4$ are both hydrogen atoms.

4 A catalyst as claimed in claim 1 wherein the ester of the formula (I) is methylene di-benzoate.

5 A stereospecific alpha-olefin polymerisation catalyst system comprising

i a Ti(IV) halide supported on magnesium halide as a catalyst support;

ii an ester of the formula (I) as defined in any one of claims 1 to 4 as an internal electron donor;

iii a co-catalyst; and

iv an external electron donor.

6 A catalyst system as claimed in claim 5 wherein the co-catalyst is an aluminium alkyl or haloalkyl.

7 A catalyst system as claimed in claim 6 wherein the co-catalyst is aluminium triethyl, aluminium triisobutyl or aluminium trioctyl.

8 A catalyst system as claimed in any one of claims 5 to claim 8 wherein the external electron donor is a dialkoxydialkylsilane.

9 A method of making a polyolefin polymer comprising polymerising at least one $C_3$ to $C_6$ alpha-olefin, optionally with ethylene, in the presence of the stereospecific alpha-olefin polymerisation catalyst system as claimed in any one of claims 5 to claim 8.

10 A method as claimed in claim 9 wherein the alpha-olefin is propylene.